# EUROPEAN PATENT APPLICATION

(11) **EP 2 456 058 A1**
(43) Date of publication of application: **23.05.2012**
(21) Application number: 10251990.7
(22) Date of filing: 23.11.2010
(51) Int. Cl.: H02M 3/335

(54) **A controller for an additional converter**

(71) Applicant: NXP B.V., 5656 AG Eindhoven (NL)
(72) Inventor: Pansier, Frans, Redhill, Surrey RH1 1DL (GB); Smeets, Patrick Emanuel Gerardus, Redhill, Surrey RH1 1DL (GB); Shrestha, Rameswor, Redhill, Surrey RH1 1DL (GB); Nowak, Katarzyna, Redhill, Surrey RH1 1DL (GB); Halberstadt, Hans, Redhill, Surrey RH1 1DL (GB); Hoogzaad, Gian, Redhill, Surrey RH1 1DL (GB)
(74) Representative: Hardingham, Christopher Mark

(57) **Abstract**

A controller (302) for an additional voltage converter, wherein the additional converter receives current from a main resonant converter. The controller is configured to provide a switch control signal for controlling a switch (312) of the additional converter. The controller comprises a first input configured to receive a first input signal (324) representative of a signal in the main resonant converter, and a delay component (332). The controller (302) is configured to determine when the first input signal (324) exceeds a zero value, and provide a signal to the delay component (332). The delay component (332) is configured to provide a switch control signal to the additional voltage converter such that the switch of the additional converter is operated after the expiry of a delay after the first input signal exceed a zero value in order to start a conduction period of the additional converter.

## Description

The present disclosure relates to the field of controllers for additional converters, and in particular, although not exclusively, controllers for additional voltage converters that receive a current from a main converter.

Multiple output converters are known to provide a plurality of different output voltages. In one prior art example, a main output voltage can be provided and other output voltages are derived from the main output voltage by means of a converter such as an up converter, a down converter, and a flyback converter. However, it has been identified that such multiple output converters can cause a large ripple current at an intermediate buffer capacitor as the RMS currents of the main output and the other (auxiliary) outputs are added statistically.

In prior art multiple output forward converters, the switching of the main converter (that provides the main output voltage) and of additional buck converters (that provide the further/auxiliary output voltages) are known to be synchronised. However, if a resonant converter is used as the main converter, it has been identified that this synchronisation leads to even worse losses in the intermediate capacitor than using a random switching frequency.

The listing or discussion of a prior-published document or any background in the specification should not necessarily be taken as an acknowledgement that the document or background is part of the state of the art or is common general knowledge.

According to a first aspect of the invention, there is provided a controller for an additional voltage converter, wherein the additional converter receives current from a main resonant converter, the controller configured to provide a switch control signal for controlling a switch of the additional converter,
the controller comprising:
a first input configured to receive a first input signal representative of a signal in the main resonant converter; and
a delay component,
wherein the controller is configured to determine when the first input signal exceeds a zero value, and provide a signal to the delay component; and
the delay component is configured to provide a switch control signal to the additional voltage converter such that the switch of the additional converter is operated after the expiry of a delay after the first input signal exceeds a zero value in order to start a conduction period of the additional converter.

Such a controller enables the conduction period of the additional converter to be started when the current that is supplied by the main resonant converter is not at zero, as the delay forces the conduction period to be spaced apart from the zero value in the current that is supplied to the additional converter. This can reduce the likelihood that the additional converter will have to draw current from the output capacitor of the main resonant converter, and therefore can reduce the ripple current/RMS current in the output capacitor.

Use of the controller can reduce the ripple current at an output capacitor of the main resonant converter.

The additional voltage converter may be a discontinuous current converter, for example a Buck converter, flyback converter, dual-SEPIC converter or forward converter.

The first input signal may be representative of the voltage across a secondary winding of the main resonant converter. The first signal may "exceed a zero value" when there is a commutation or a step change from a negative value to a positive value in voltage of the first input signal. In this way, the delay component can provide the switch control signal to the additional voltage converter such that the switch of the additional converter is operated after the expiry of a delay after a commutation in the first input signal.

The first input signal may be representative of the current flowing through a secondary winding of the resonant converter or through an output diode of the resonant converter. The first signal may exceed a zero value when the current rises form a zero value, or when the rate of change of current with respect to time (di/dt) rises from a zero value. In this way, the delay component may provide the switch control signal to the additional voltage converter such that the switch of the additional converter is operated after the expiry of a delay after the first input signal rises/changes from a zero value, or after the rate of change of the first input signal with respect to time rises from a zero value. The first input signal may have been at a zero value for an extended period of time (which may be referred to as a discontinuous mode of operation), or may rise again as soon as it reaches a zero value (which can be a border between a continuous and a discontinuous mode of operation).

In some embodiments the current may not drop down to zero at the end of a cycle at the secondary side of the resonant converter, and the start of a cycle may represent a change from a negative gradient in the current (a negative value for di/dt) to a positive gradient (a positive value for di/dt). In such embodiments, the start of the delay can be triggered by the gradient (di/dt) exceeding a zero value. This may be known as continuous operation as there is a continuous current flowing at the secondary side of the resonant converter.

It will be appreciated that embodiments disclosed herein can improve the performance of a main resonant converter working in a continuous mode of operation, a discontinuous mode of operation, or at the border between continuous and discontinuous modes of operation.

The switch control signal may be configured to turn the switch of the additional converter to an "on state" upon the expiry of a delay after the first input signal exceeds a zero value in order to start the conduction period. Turning the switch to an "on-state" can begin the conduction period of the switch of a Buck converter, for example.

The controller may comprise a second input for receiving a second input signal representative of the output of the additional converter. The controller may be configured to process the second input signal and provide a switch control signal such that the switch of the additional converter is turned off, and the conduction period of the additional converter is ended, in order to provide a desired additional output voltage. For example, the switch of a Buck converter may be turned to an "off-state" in order to end the conduction period. The converter may compare the second signal with a reference signal in order to determine when the conduction period of the additional converter should be ended.

The controller may be configured to apply a switching frequency to the additional converter that is double the switching frequency of the resonant converter. The additional converter may be operated such that it has a conduction period for each half wave of the resonant converter.

The delay may be a fixed delay period. A fixed delay period can provide convenient implementation and can be considered as satisfactory if the switching frequency of the main resonant converter does not significantly vary over time.

The delay may be a variable delay period. A variable delay period can provide further advantages as the control of the additional converter can be tailored to specific operating conditions and take into account changes in the switching frequency of the resonant converter.

The controller may further comprise a delay adjuster. The delay adjuster may be configured to provide a delay adjust signal to the delay component. The delay adjuster may be configured to adjust the length of the delay such that the conduction period of the additional converter is centred, or substantially centred, around a peak current in the first input signal.

The delay adjuster may be configured to record an operational parameter of the additional converter or main converter when the switch of the additional converter is turned on as a first value, and record an operational parameter of the additional converter or main converter when the switch of the additional converter is turned off as a second value. The first and second value can be used to adjust a variable delay period and improve performance. The delay adjuster may comprise:
a comparator configured to compare the first value with the second value, and output a delay adjust signal that is configured to set the delay of the delay component in order to reduce the difference between the first and second values.

By bringing the first and second values closer together, or maintaining the first and second values "close enough" together, the additional converter can be operated such that its conduction period is symmetrically placed towards the centre of a half-wave waveform in the first input signal.

The operational parameter may be one or more of:
a value of the first signal; and
a value of the output of the main converter.

The delay adjuster may be configured to record the time between (i) the first input signal exceeding a zero value and (ii) a switch-on of the additional converter as a first value, and record (iii) the time between a switch-off of the additional converter and (iv) a change to a zero value in the first input signal as a second value. The delay adjuster may comprise:
a comparator configured to compare the first value with the second value, and output a delay adjust signal that is configured to set the delay of the delay component in order to reduce the difference between the first and second values.

The delay component may be configured to provide the switch control signal to the additional voltage converter such that the switch of the additional converter is operated upon the expiry of a delay after the first input signal exceeds a zero value in order to start the conduction period of the additional converter. The switch control signal may be provided immediately after the expiry of the delay, or shortly thereafter.

The controller may comprise an additional controller that is configured to determine which of a plurality of additional converters is providing the highest output current, and operate the determined additional converter such that it is the second of the plurality of additional converters to be operated.

The controller may comprise an additional controller that is configured to receive a signal representative of whether or not the additional converter is providing the highest output current of one or more other additional converters, wherein the additional controller is configured to:
if the additional converter is providing the highest output current, operate the additional converter (i) after the expiry of the delay and (ii) when only one delay associated with the other additional converters has expired; and
if the additional converter is not providing the highest output current, operate the additional converter upon the expiry of the delay.

It has been found that causing the additional converter that is providing the highest output current to be operated as the second additional converter can further improve operation of the converter.

The converter may be configured to provide switch control signals for controlling the switches of a plurality of additional converters. The controller may further comprise a current measurement and delay adjuster that is configured to measure the output current of the additional voltage converter or the main resonant converter, and provide signals to delay components associated with each of the additional converters such that the current that is drawn from the additional converters is made similar to the current provided by the output of the main resonant converter. Making the currents similar may involve staggering the delays that are applied to the additional converters and/or determining appropriate delays for the additional converters such that the ripple current through an output capacitor of the main resonant converter is reduced. It will be appreciated that this may be done by processing the output currents of each of the additional converters along with the output current of the main converter.

There may be provided a converter, a device or a power supply comprising any controller disclosed herein. Such a converter, device or power supply may be configured to provide or use a plurality of different voltage levels.

According to a further aspect of the invention, there is provided a method of controlling an additional voltage converter, wherein the additional converter receives current from a main resonant converter, the method comprising:
receiving a first input signal representative of a signal in the main resonant converter;
determining when the first input signal exceeds a zero value; and
providing a switch control signal to the additional voltage converter such that the switch of the additional converter is operated after the expiry of a delay after the first input signal exceeds a zero value in order to start a conduction period of the additional converter.

There may be provided a computer program, which when run on a computer, causes the computer to configure any apparatus, including a controller, converter, power supply, or device disclosed herein, or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium such as a disc or a memory device, or may be embodied as a transient signal. Such a transient signal may be a network download, including an internet download.

A description is now given, by way of example only, with reference to the accompanying drawings, in which:
Figure 1 illustrates a circuit diagram of a prior art half bridge series resonant converter;
Figure 2 Figure 2 illustrates a controller 202 according to an embodiment of the invention;
Figure 3 illustrates a controller 302 according to another embodiment of the invention;
Figure 4 shows a timing diagram illustrating operation of the circuit of Figure 3;
Figure 5 illustrates a circuit diagram according to a further embodiment of the invention;
Figure 6 shows a timing diagram illustrating operation of the circuit of Figure 5;
Figure 7 illustrates a circuit diagram according to another embodiment of the invention;
Figure 8 illustrates a circuit diagram according to another embodiment of the invention;
Figure 9 illustrates a circuit diagram according to a further still embodiment of the invention;
Figure 10 illustrates a circuit diagram according to a yet further embodiment of the invention;
Figure 11 illustrates a circuit diagram according to an embodiment of the invention;
Figure 12 illustrates example waveforms for a circuit having two auxiliary/additional converters according to an embodiment of the invention; and
Figure 13 illustrates an additional auxiliary converter according to an embodiment of the invention.

One or more embodiments described herein relate to one or more additional/auxiliary voltage converters that receive current from a main converter (which may be a resonant converter) and provide one or more additional/auxiliary voltage outputs. The additional voltage converter(s) and the main converter may be considered together as a power supply that provides a plurality of different output voltages.

The additional/auxiliary voltage converters are controlled such that the times at which they draw current from the main converter (their conduction periods) correspond with a certain portion of a half-wave in the current that is supplied by the main converter in order to improve the performance of the main converter and/or additional/auxiliary voltage converters. In one example, the conduction period of an additional/auxiliary voltage converter is centred around a peak in the current provided by the main converter. This can reduce the likelihood that the additional/auxiliary voltage converter will have to draw current from the output capacitor of the main converter, as the current provided by the main converter should be sufficient.

Operating the additional/auxiliary voltage converter in this way can reduce the ripple current at an output capacitor of the main resonant converter.

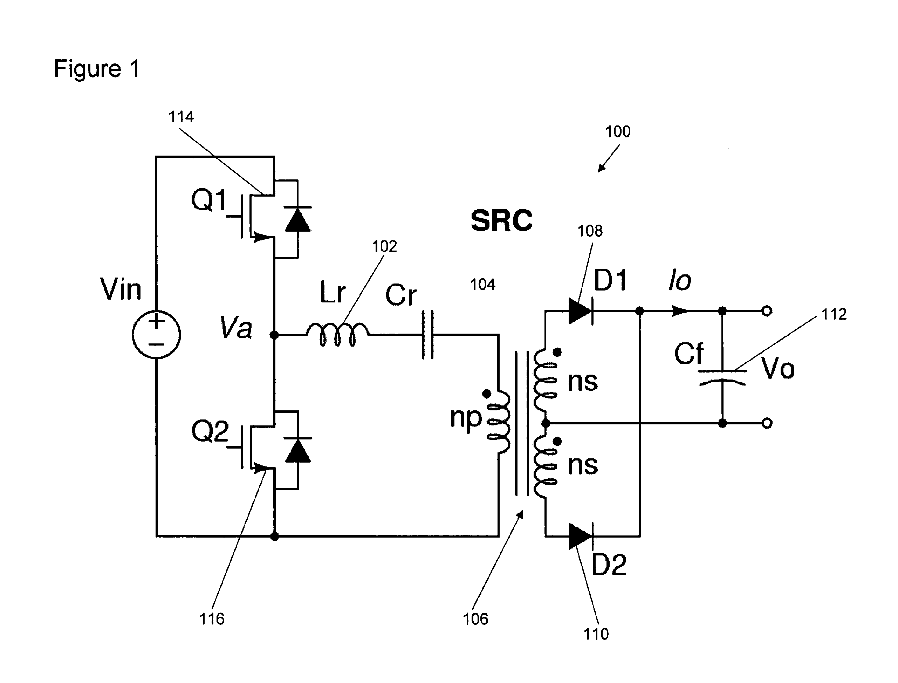

Figure 1 illustrates a circuit diagram of a prior art half bridge series resonant converter 100, and is one example of many different types of resonant converters.

The converter 100 includes an inductor 102 and capacitor 104 in series, which together form a resonant tank. The converter 100 includes two half bridge switches 114, 116 that are used to control the operation of the converter 100.

The converter also includes a transformer 106. The resonant tank 102, 104 is connected to the primary winding of the transformer 106. The transformer 106 has two secondary windings, each of which is connected to an output capacitor 112 of the converter 100 via a rectifying diode 108, 110.

One or more embodiments disclosed herein relate to the provision of multiple different output voltages that are derived from the secondary side of the transformer 106, and can reduce the dissipation requirements of the output capacitor 112, amongst other things, thereby saving cost and size.

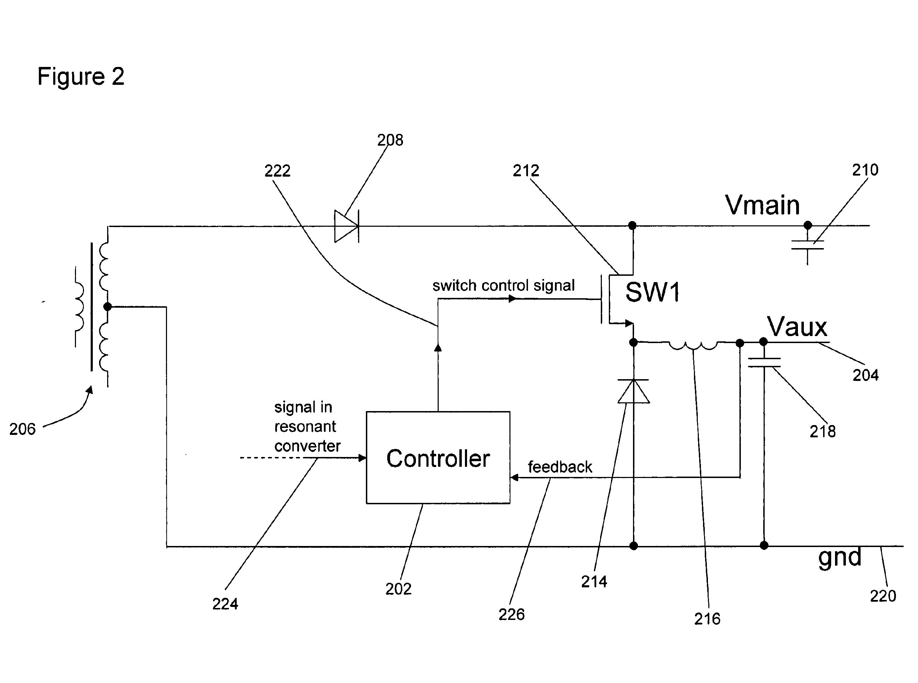

Figure 2 illustrates a controller 202 according to an embodiment of the invention, and how the controller 202 can be used with a Buck converter at the secondary side of a main converter to provide an auxiliary output voltage 204. The main converter can be a resonant converter, which can be any type of resonant half bridge converter. It will be appreciated that embodiments of the invention are not limited to a series resonant (SR) half bridge converter as shown in Figure 1. Depending on the value of the magnetizing inductance Lm of the transformer, the main converter can be a SR (when Lm is very high) or an LLC converter (series-parallel resonant) (when the value of Lm is roughly 4 to 10 times the value of the series resonant inductor). An LLC converter can be more popular than an LC (SR) converter for off-line converters, as its performance is better suited for varying input voltage and wide load range. In other examples, an LCC or higher order resonant converter can be used.

The transformer 206 and the secondary side components relating to one of the secondary windings of the resonant converter are shown in Figure 2. The primary side components (that is, the components that are connected to the primary winding of the transformer 206) are omitted for clarity. Also, it will be appreciated that a similar circuit to that shown in Figure 2 will be provided for the second secondary winding of the transformer 206, and that the components associated with the second secondary winding are omitted for clarity.

Figure 2 illustrates a diode 208 and output capacitor 210 in series, which are components of the resonant converter and provide the main output voltage.

The components of a Buck converter are shown connected between ground 220 and the junction between the diode 208 and output capacitor 210 of the resonant converter. The Buck converter is used to provide an auxiliary voltage 204. As is known in the art, the Buck converter comprises a switch 212, a diode 214, and inductor 216 and an output capacitor 218, which will be referred to as an auxiliary output capacitor in order to distinguish it from the output capacitor 210.

The switch 212 of the Buck converter is controlled by a switch control signal 222 that is output by the controller 202 according to an embodiment of the invention. The controller 202 receives an input signal 224 representative of a signal in the resonant converter. Examples of this input signal are described below, and include the current through the output diode 208 of the resonant converter and the voltage across a secondary winding of the transformer 206.

The controller 202 generates a switch control signal 222 that turns the switch 212 on after the expiry of a delay after the input signal 224 exceeds a zero value. In this way, the conduction period of the Buck converter occurs after the current provided by the resonant converter has risen from its minimum value. That is, the delay enables the current that is provided by the resonant converter to rise before it is used by the Buck converter to provide the auxiliary output voltage 204. This can reduce the likelihood that the Buck converter will draw current from the main output capacitor 210 during its conduction period, as there is an increased likelihood that sufficient current will be provided by the resonant converter. Operating the Buck converter in this way will reduce the ripple in the current through the main output capacitor 210, and therefore it can reduce the losses in that capacitor and/or enable the use of much smaller capacitors than is possible with the prior art.

In this embodiment, the controller 202 also receives a feedback signal 226 representative of the auxiliary voltage output 204. The feedback signal 226 is used by the controller 202 to determine how long the switch 212 should be on, in order to provide the desired auxiliary output voltage. This may involve comparing the auxiliary voltage output voltage 204 with a reference voltage, as is known in the art. The feedback signal 226 is sued to determine when the switch control signal 222 should cause the switch 212 to be turned off.

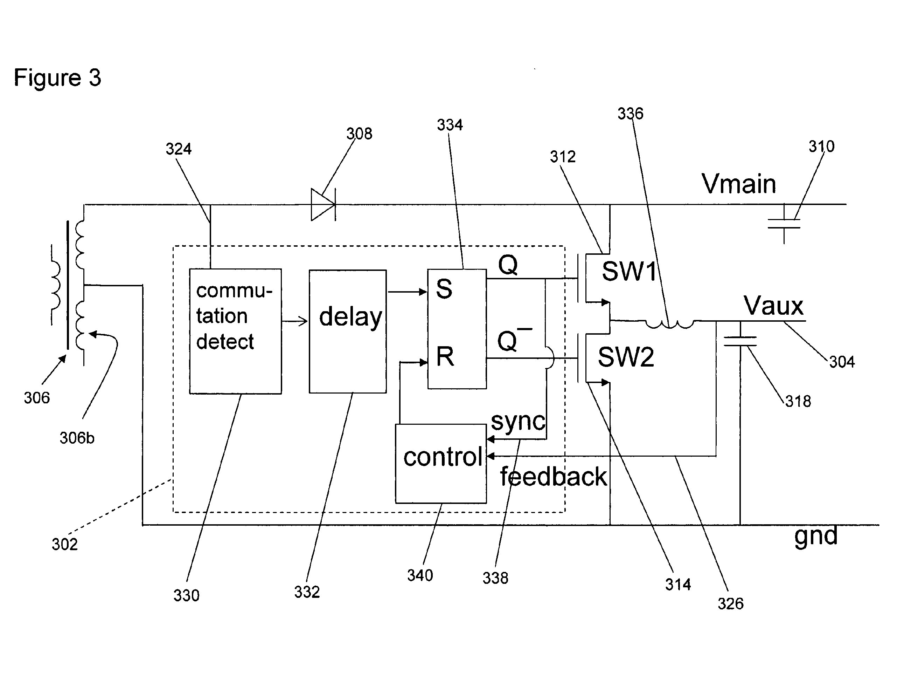

Figure 3 illustrates a controller 302 according to another embodiment of the invention. As with the embodiment of Figure 2, and the embodiments that follow, the person skilled in the art will appreciate that a symmetrical implementation can be used whereby a similar circuit is connected to the second secondary winding of the transformer 306. However, a symmetrical implementation should not be considered as essential to the invention, as a singled-sided implementation can also provide advantages over the prior art.

The embodiment of Figure 3 illustrates a Buck converter as the additional converter that provides the auxiliary output voltage (Vaux) 304, although the skilled person will appreciate that other types of converters can be used, for example any converter that has discontinuous input current can be used. The additional converter may be a flyback, dual-SEPIC, or forward converter, as non-limiting examples. The following description is to be understood as applicable for other types of additional converters as well.

The Buck converter includes a first switch SW1 312, an inductor 33, and an auxiliary output capacitor 318. Instead of a diode, this embodiment of a Buck converter includes a second switch SW2 314 that is controlled to be in the operating state to that of the first switch SW1 312. In this way, the second switch SW2 314 is closed when a corresponding diode would have been forward biased, and is open when the corresponding diode would have been reverse biased. Therefore, the second switch SW2 314 provides the same functionality as the corresponding diode when operated in this way. As is known in the art, the use of a second switch SW2 314 instead of a diode can be advantageous when a large amount of current is flowing through the Buck converter.

The controller 302 includes a commutation detect component 330 that receives a signal from the secondary winding of the transformer 306 as an input. The commutation detect component 330 provides an output signal to a delay component 332. The delay component 332 has an output that provided to the set (S) input of an SR flip-flop 334. The Q output of the SR flip-flop 334 is an example of a switch control signal that is used to control the state of the first switch SW1 312, and the *Q̅* output of the SR flip-flop 334 is used to control the state of the second switch SW2 314. The controller 302 also includes a control component 340 that receives a feedback input 326 from the output of the Buck converter and a sync input 338 from the Q output of the SR flip-flop 334. The control component 340 generates an output signal that is provided to the reset (R) input of the SR flip-flop 334.

The commutation detect component 330 receives a signal representative of the voltage at the secondary winding of the transformer 306, and detects the instant of commutation of the resonant converter. The commutation detect component 330 outputs a signal to the delay circuit/component 332 when the voltage that is provided by the secondary winding of the transformer 306 changes sign. The occurrence of a change in sign of the voltage at the secondary side is representative of the conducting switch at the primary side being switched on, and the other switch being switched off. This results in a voltage step at the secondary side.

Upon expiry of fixed delay after receiving the signal from the commutation detect component 330, the delay component 332 sets the SR flip-flop 334. Setting the S input of the SR flip-flop 334 causes the Q output of the SR flip-flop to go high and the *Q̅* output of the SR flip-flop to go low, thereby starting a conduction period of the Buck converter. In this way, the first switch SW1 312 starts conducting upon the expiry of a delay after a voltage change in the signal received at the secondary winding.

In other embodiments, a delay can be applied based on any type of signal at the secondary winding, such as a zero-crossing in a current signal, exceeding a zero value in the current signal, and the rate of change in the current signal with respect to time exceeding zero as non-limiting examples.

Those skilled in the art will appreciate that, in accordance with normal designs, the other secondary winding 306b is also connected to the output capacitor 310 via an additional diode (not shown). Such an additional diode is shown in Figure 1 as diode D2. The additional diode and the other circuitry that is associated with the other secondary winding 306b are not included in Figure 3 in order to aid clarity. In addition, it will be appreciated that the operation of the auxiliary system will be the same for both halves of the resonating period of the resonant converter such that both of the secondary windings of the transformer 306 will contribute to the auxiliary output voltages 304.

The control component 340 receives the feedback signal 326 from the output of the Buck converter, and determines for how long the Buck converter should conduct in order to provide the desired auxiliary output voltage Vaux 304, as is known in the art. The control component 340 then resets the SR flip-flop 334 in order to set the Q output of the SR flip-flop low and set the *Q̅* output of the SR flip-flop high. This ends the conduction period of the Buck converter. The control component 340 is synchronised by the Q output of the SR flip-flop 334.

The embodiment of Figure 3 offers advantages over systems that involve synchronising the additional converters with the main converter, particularly for systems that have a resonant converter as the main converter. This is because, at the instant of commutating, the output current of the converter is zero if the converter is operated below the frequency of the series resonance. If the resonant converter is operated at a frequency that is above the frequency of the series resonance, then the current at the start of the conduction period will have its minimum. Therefore, synchronising the additional converters with the main converter without a delay would mean that the control switches/FET's of the additional converters are switched on at the instant of commutation of the half bridge, and therefore will lead to even more losses in the capacitor than using a random switching frequency as the additional converters will always be operated when the current in the main converter is at a minimum.

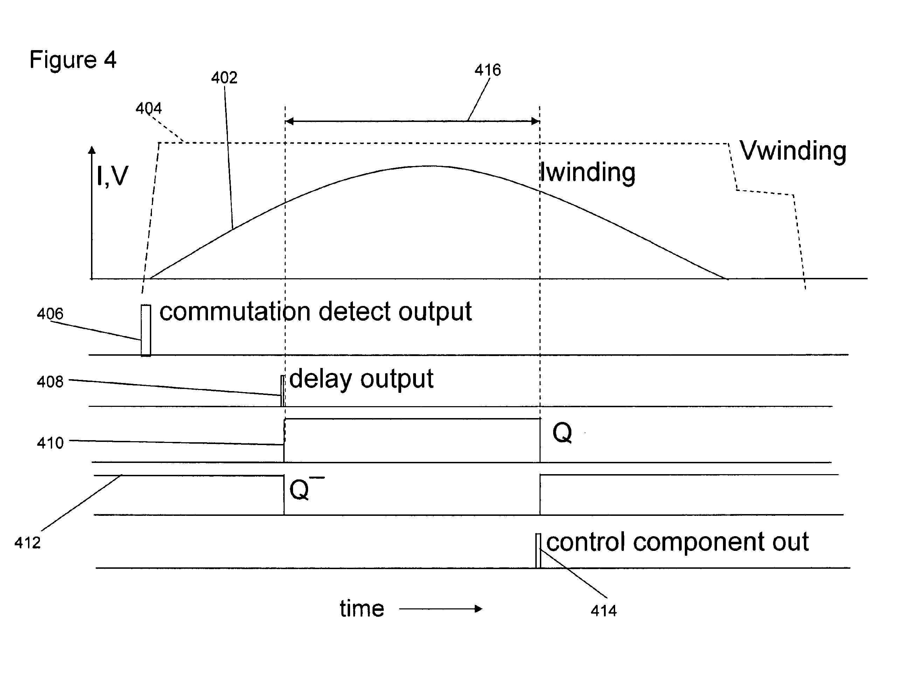

Figure 4 shows a timing diagram illustrating operation of the circuit of Figure 3 in a discontinuous mode of operation. That is, the current in the secondary winding drops to zero before the end of each cycle, or at the end of each cycle. Figure 4 shows seven signals, with time passing from left to right.

The top signal is the current in the secondary winding of the transformer (Iwinding) 402, and the voltage across the winding (Vwinding) 404 is also shown as a dotted line. The second signal is the commutation detect output 406 and comprises a pulse when there is a change in sign of the voltage across the secondary winding 404. The delay output 408 comprises a pulse that occurs after the expiry of the fixed delay from the commutation detect output signal 406. The pulse of the delay output 408 causes the Q output of the SR flip-flop to be set high, and the Q output of the SR flip-flop is shown with reference 410 in Figure 4. The conduction period of the Buck converter is started when the Q output of the SR flip-flop is set high, and the conduction period is shown with reference 416 in Figure 4.

Those skilled in the art will appreciate that the resonant converter can also operate in a continuous mode whereby the current in the secondary winding (Iwinding) will not start at zero for each cycle, but will have an offset. The current in the secondary winding Iwinding will be cut-off at the end of a cycle at a level that is substantially equal to the level of the current at the start of the half cycle. This will however not influence the behaviour of the system, which detects a change in sign of the voltage across the secondary winding (Vwinding).

In other embodiments, a detection of the rate of change of current with respect to time (di/dt) can be used to determine when the delay should be started for a resonant converter operating in a continuous mode. For example, when the rate of change of current (di/dt) changes from a negative value to a positive value (thereby passing through zero and exceeding a zero value), the delay can be started.

The control component output 414 comprises a pulse after a period of time that is determined as appropriate for providing the desired auxiliary output voltage. The pulse in the control component output 414 causes the SR flip-flop to be reset therefore setting the Q output 410 low and the *Q̅* output 412 high, thereby ending the conduction period 416 of the Buck converter.

The embodiment illustrated by Figure 3 and 4 that uses a fixed delay, is relatively simple and easy to implement, and can provide significant advantages over the prior art, as it can reduce the RMS current though the output capacitor of the main converter, thereby reducing the losses and/or allowing the use of a considerably smaller capacitor. It will be appreciated that a smaller capacitor can save cost and space. The advantages can be particularly noticeable in examples where the switching frequency of the resonant converter is relatively consistent over time, and also the waveform of the output current within a half cycle of the resonant converter is relatively consistent over time. However, further improvements can be achieved by using a variable delay instead of a fixed delay. The variable delay can be adjusted to account for the actual wave shape of the current from the main converter.

The additional Buck converter of Figure 3 has a switching frequency that is double the switching frequency of the main resonant converter, as the switching that is illustrated in Figure 4 occurs for every half wave in the current at the secondary side of the transformer 306. However, in some embodiments it may be considered adequate for the additional Buck converter to be switched for every other half wave of the current at the secondary side of the transformer. Therefore, the switching frequency of the additional Buck converter may be the same as the switching frequency of the main resonant converter.

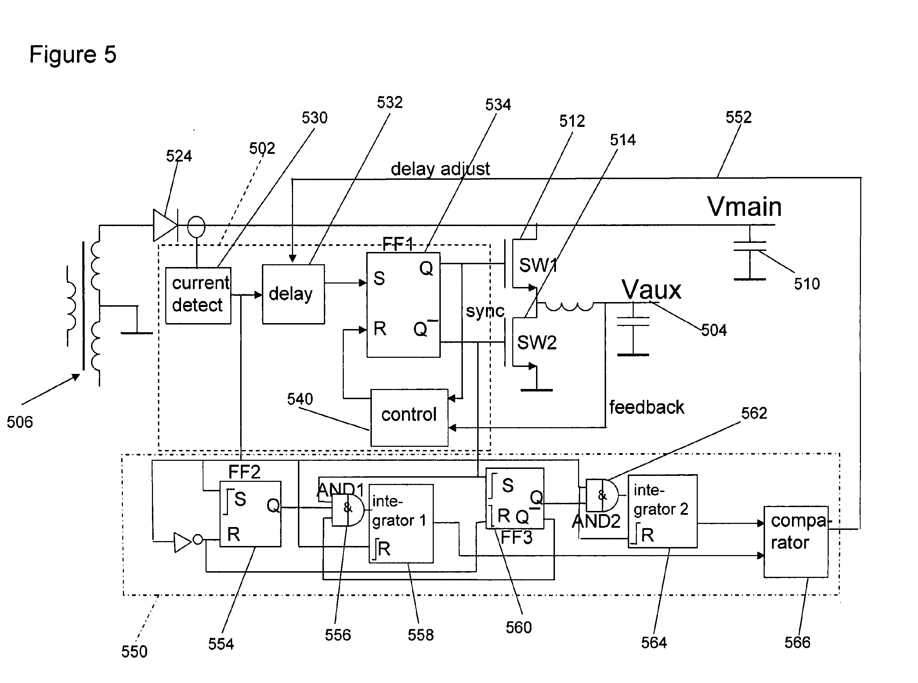

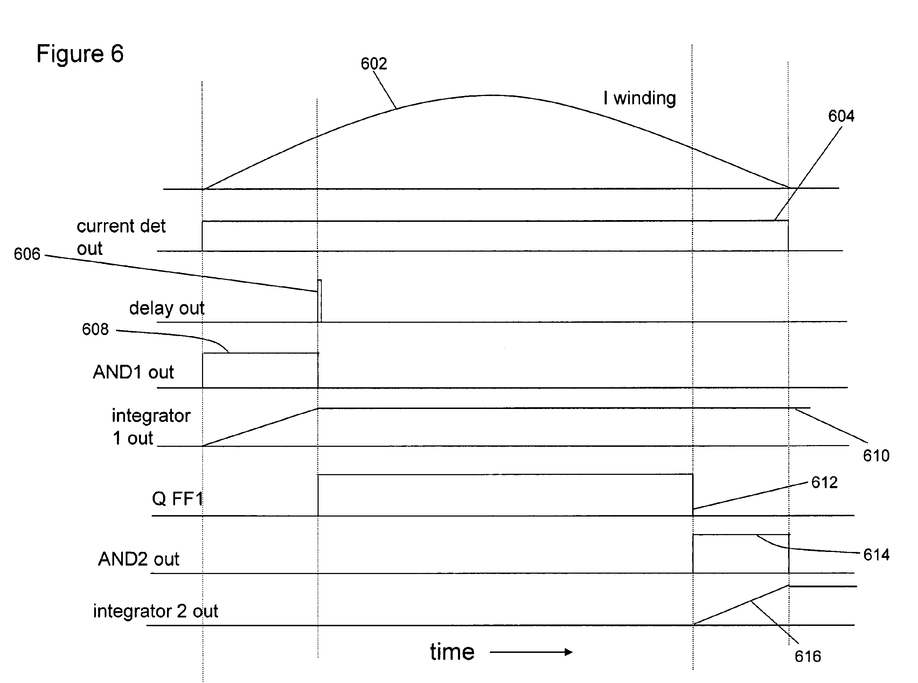

A circuit diagram according to a further embodiment of the invention is provided as Figure 5, and a timing diagram of operation of the circuit of Figure 5 is provided as Figure 6. This embodiment uses a variable delay to further improve the operation of the converter/s. The components of Figure 5 that are also present in Figures 2 or 3 will not be described again in detail here.

A difference between the circuit of Figure 5 and that of Figure 3, is that the circuit of Figure 5 has a current detector 530 that produces a positive output for the times at which it detects a current. This is contrast to the commutation detector 330 of Figure 3 that produces an output pulse upon detecting commutation.

The circuit of Figure 5 includes a controller 502 and a delay adjuster 550. The delay adjuster 550 outputs a delay adjust signal 552 to the delay component of the controller 502 in order to set the length of the delay. The delay adjuster can be considered as consisting of two sets of components: a first set of components consisting of an SR flip-flop (FF2) 554, an AND gate (AND1) 556 and integrator 1 558; and a second set of components consisting of an SR flip-flop (FF3) 560, an AND gate (AND2) 562 and integrator 2 564. As described in more detail below, the first set of components is used to determine a length of time (T1) between (i) the start of a half-cycle in the current in the secondary winding and (ii) the start of the conduction period of the additional Buck converter. The second set of components is used to determine a length of time (T2) between (iii) the end of the conduction period of the additional Buck converter and (iv) the end of the current in the secondary winding. The delay adjuster 550 also includes a comparator 566 that compares T1 with T2, and generates the delay adjust output signal 552 that is configured to set the size of the delay in order to reduce or maintain the difference between T1 and T2. For example, if the difference between T1 and T2 is considered small enough (for example, by comparing it with a threshold), then the delay may not need to be adjusted.

Operation of the delay adjuster 550 will now be described.

A discussion of the "first set of components" of the delay adjuster 550 is provided first. At the start of a half cycle in the current through the output diode 524 of the resonant converter, the Q outputs of FF2 554 and FF3 560 are low, as are the outputs of the integrators 558, 564. When the current detector 530 detects the start of the current through the output diode 524, the output of the current detector 530 becomes logic 1. The transition from low to high of the output signal from the current detector 530 triggers the start of the delay timer 532, and also sets FF2 554. FF2 554 is an SR flip-flop with a positive edge transition triggered Set (S) input. At this time, also the *Q̅* output of FF1 534 and FF3 560 are high. The AND gate (AND1) 556 has three inputs: the *Q̅* output of FF1 534, the Q output of FF2 554 and the *Q̅* output of FF3 560; and a single output that is provided as an input to integrator 1 558. Therefore, when the output of the current detector 530 goes high, the input of integrator 1 558 also goes high.

After the delay time has elapsed, the output of the delay circuit 532 goes high, FF1 534 is set, the Q output of FF1 534 goes high and the *Q̅* output of FF1 534 goes low. The act of the *Q̅* output of FF1 534 going low causes the output of the AND gate (AND1) 556 to go low, and the input to integrator 1 558 to go low.

The purpose of integrator 1 558 is to output a signal that is proportional to the time during which its input is high. In this way the output of integrator 1 558 is an indicator of the time that has passed between the start of the current through the diode 524 and the instant that SW1 512 (the switch in the Buck converter) is switched on so that a current starts to flow from the main output voltage Vmain to the auxiliary output voltage Vaux 504.

The control circuit 540 determines the time for which SW1 512 should conduct in order to provide the desired auxiliary output voltage Vaux 504. This time is terminated by the control circuit 540 outputting a reset signal that resets FF1 534, which in turn sets the Q output of FF1 534 low and sets the *Q̅* output of FF1 534 high. Setting the Q and *Q̅* outputs of FF1 534 in this way causes SW1 512 to be switched off, SW2 514 to be switched on, and the conduction period of the additional converter to end.

In embodiments where a freewheeling diode is used instead of SW2 514, the *Q̅* output of FF1 534 is only connected to the AND gate (AND1) 556 and the set input of FF3 560. Alternatively, the Q output of FF1 534 can be through an inverter in order to provide the same signal as is provided by the *Q̅* output of FF1 534.

Turning now to the "second set of components" of the delay adjuster 550. The positive going transition of the *Q̅* output of FF1 534 at the end of the conduction period FF3 sets FF3 560, thereby causing the Q output of FF3 560 to go high. The AND gate (AND2) 562 of the second set of components has two inputs: the output of the current detector 530, and the Q output of FF3 560; and a single output that is provided as an input to integrator 2 564.

The output of the AND gate (AND2) 562 therefore goes high at the end of the conduction period as the Q output of FF3 560 goes high, and the current detector 530 output is still high. This starts integrator 2 564. The integrator 2 564 is stopped at the end of the conduction of output diode 524, as the output of the current detector 530 will drop to zero at this time and the output of AND2 562 will go low. Output *Q̅* of FF3 560 is then low, which prevents the output of AND1 556 becoming high again.

The purpose of integrator 2 564 is to output a signal that is proportional to the time during which its input is high. In this way the output of integrator 2 564 is an indicator of the time that has passed between the instant that SW1 512 is switched off (so that a current no longer flows from the main output voltage Vmain to the auxiliary output voltage Vaux 504) and the end of the current through the diode 524.

Both integrator 1 558 and integrator 2 564 have reset pins that are connected to the output of the current detector 530. In this way, both of the integrators 558, 564 are reset at the start of the conduction of the output diode so that they start from zero for each half cycle in the current through the diode 524. It will be appreciated that other reset mechanisms are possible, for example circuitry can be provided to reset the integrators 558, 564 at the instant that the primary side is commutating, which can be detected by monitoring the dV/dt across the output winding.

The comparator 566 of the delay adjuster 550 compares the output of integrator 1 558 with the output of integrator 2 564 (and in this way the two time spans identified above), and outputs a corrective delay adjust signal 552 that is provided to the delay component 532 in order to adjust the delay time, if required.

This corrective action applied to the delay circuit 532 can be synchronised with the commutation at the primary side of the transformer 506. This can be advantageous as at this instant the information that is used to adjust the delay is fully "valid", in that the signal 552 that serves to adjust the delay may be correct only when the full cycle has elapsed. The full cycle has elapsed when the transformer current goes from zero to maximum, and back to zero. In some examples, signals from a complete cycle need to be processed before the appropriate delay can be calculated. For example, the time intervals before and after the conduction of the switch of the buck converter should be taken into account before the required delay can be determined.

The specific implementation of the delay adjuster 550 may control its output such that it is correct at the start of a cycle, but not necessarily at intermediate points during the cycle. The output of the delay adjuster 550 can be variable during a cycle in accordance with a specific implementation that is used. In such examples, only after the signal "current det out" 604 of Figure 6 has dropped to 0 is the output signal 552 of the delay adjuster 550 suitable for changing the delay of the delay component 532. In other examples the "current det out" signal 604 from a previous cycle may be maintained until the end of the present cycle.

Alternatively, the advantages can be achieved by applying the corrective action when it is determined that the current though the secondary winding has dropped to zero.

The control component 540 can be any synchronise-able pulse width modulation (PWM) controller. In one example, the integrators 558, 564 can conveniently be built with a capacitor that is charged by a constant current, and/or the delay circuit 532 can be built with a timing capacitor that is charged by a current that is adjusted according to the delay adjust signal 552.

Figure 6 illustrates a timing diagram showing operation of the circuit of Figure 5. Shown in Figure 6 are: the current in the secondary winding of the transformer (I winding) 602, the output of the current detector 604, the output signal of the delay circuit 606, the output signal from the first AND gate (AND1) 608, the output signal from integrator 1 610, the Q output of FF1 612, the output signal from the second AND gate (AND2) 614, and the output signal from integrator 2 616.

As will be appreciated from the description of Figure 5, the magnitude of the output signals from the integrators (signals 610 and 616 in Figure 6) represents the period of time that the integrator has a high input. It can be seen that the magnitude of the integrator output signals 610, 616 linearly increase whilst the input to an integrator is high, and therefore the final value of integrator output signal 610, 616 after the integrator input goes low represents how long the input to the integrator has been high.

The embodiment of Figure 5 provides advantages over the prior art as the conduction period of the Buck converter is controlled so that it is in the middle of a half wave in the current through the diode 524. That is, the operation of the Buck converter is controlled so that the period of time between the start of the half wave and the start of the conduction period is made similar to (or the same as) the period of time between the end of the conduction period and the end of the half cycle. This can increase the likelihood that the current through the diode 524 is sufficient for the additional Buck converter, and therefore reduce the likelihood that current is drawn from the output capacitor 510. This, in turn, reduces the ripple current in the capacitor, and therefore improves the operation of the circuit.

The delay adjuster 550 can be configured to control the additional Buck converter such that there is a minimum current in the main output capacitor 510.

An example that illustrates the improvements that can be achieved with embodiments of the invention will now be provided. In this example, a main output of 12V 3A, and an auxiliary output of 5V 10A is required. If random switching is used then three 1500uF output capacitors are required and losses of 339mW take place. Also, the volume of the output capacitors is 7359 mm³. In contrast, if optimal synchronisation is provided by an embodiment of the invention, then a single 2700uF output capacitor can be used, and the losses are reduced to 69mW. This represents an improvement in power losses by a factor of 4.9. Also, the volume of the output capacitors is reduced to 3680 mm³ (using capacitors in the Rubycon ZL series), which represents an improvement over the prior art example by a factor of 2.1. Further still, the large capacitors required by the prior art are expensive, and the relative price of the output capacitors that are suitable for use with embodiments of the invention is a significant advantage.

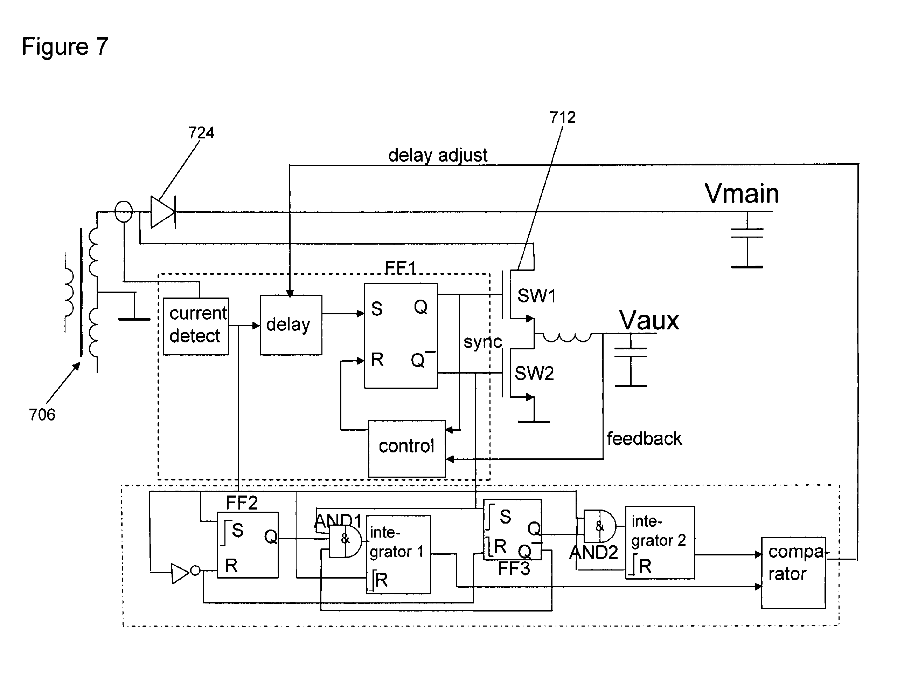

Figure 7 illustrates a circuit diagram according to another embodiment of the invention. The circuit of Figure 7 is similar to that of Figure 5, and components that are common to both Figures will not be described again here.

In the circuit of Figure 7, the additional buck converter is directly connected to the winding of the transformer. That is, the switch SW1 712 is connected to the anode of the output diode 724, and not the cathode of the output diode 524 as in Figure 5. The anode of the output diode 724 is connected directly to the secondary winding of the transformer 706. This has the advantage that now the current that is delivered to the auxiliary output does not flow through the output diode 724, and therefore the output diode 724 can be replaced with a smaller and cheaper diode. Although the switch SW1 712 has to be bi-directional, that is a switch that can block the current in both directions, this still offers advantages in terms of price, and the combined size of the diodes and switches, while maintaining the advantage in reducing the ripple through the main output capacitor. In Figure 5 the switch SW1 512 can be a simple single N-MOSFET, in contrast, the switch SW1 712 of Figure 7 may be an N-MOSFET and a diode.

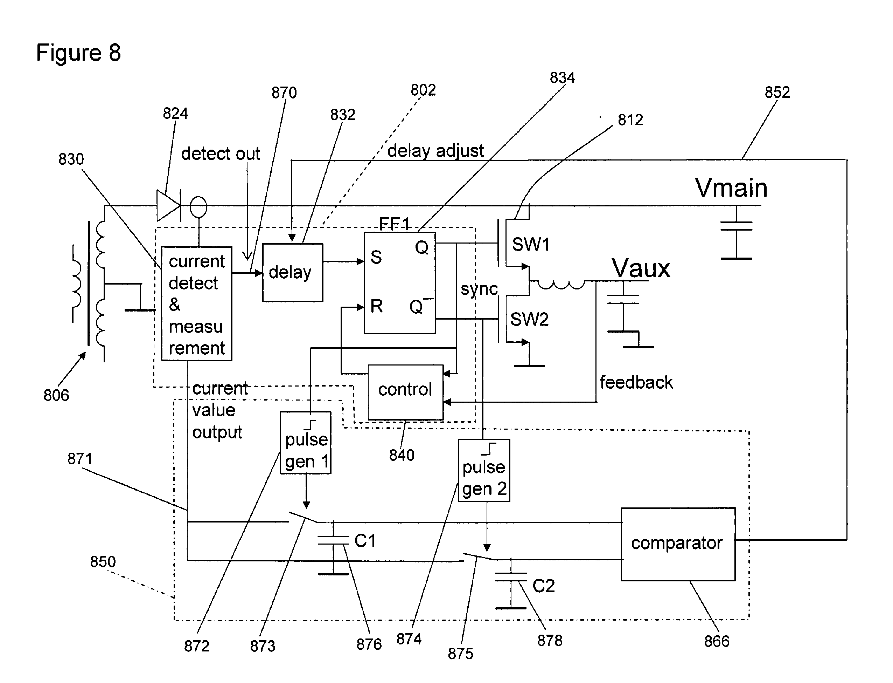

Figure 8 illustrates a circuit diagram according to another embodiment of the invention. In this embodiment, the controller 802 includes a current detect and measurement component 830 that detects and measures the current though the output diode 824 (or through the winding of the transformer 806, which are identical in this embodiment). The current detect and measurement component 830 outputs a detect out signal 870 which is a pulse when the current starts to flow through the diode 824, and a current value output signal 871 representative of the magnitude of the current through the diode 824.

The delay adjuster 850 includes a first pulse generator 872, a first sampling switch 873, a first sampling capacitor 876, a second pulse generator 874, a second sampling switch 875, a second sampling capacitor 878 and a comparator 866. The first pulse generator 872 is connected to the Q output of FF1 834 such that it provides a pulse upon a leading edge of the signal at the Q output of FF1 834. The second pulse generator 874 is connected to the *Q̅* output of FF1 834 such that it provides a pulse upon a leading edge of the signal at the *Q̅* output of FF1 834.

At the instant that the current starts to flow through the output diode 824, the current detect and measurement component 830 outputs a trigger signal (denoted as detect out 870), that triggers the delay circuit 832 in a similar way to that described above with reference to Figure 3. This in turn triggers flip-flop FF1 834, and starts the conduction of SW1 812.

At the instant that the Q output of FF1 834 becomes high, the first pulse generator 872 is triggered to temporarily close the first sampling switch 873. When the first sampling switch 873 is closed, the current value output signal 871 is provided to the first sampling capacitor 876 such that the value of the current through the diode when the pulse occurred is stored by the first sampling capacitor 876. In this way, the first sampling switch 873 and first sampling capacitor 876 provide a sample and hold component that samples the value of the current through the diode at the start of the conduction period of the additional converter.

As with other embodiments disclosed herein, the control component 840 determines the on-time of SW1 812. Once this on-time has elapsed, FF1 834 is reset, output Q becomes low (switching off SW1 812) and the *Q̅* output of FF1 834 goes high. The transition from low to high of the *Q̅* output triggers the second pulse generator 834. The second pulse generator interacts with the second sampling switch 875 and second sampling capacitor 878 in the same way as discussed above in order to sample the value of the current through the diode at the end of the conduction period of the additional converter.

A comparator circuit 866 compares the two sampled values that are stored by the sampling capacitors 876, 878, and outputs a delay adjustment signal 852, if appropriate.

The embodiment of Figure 8 provides advantages over the prior art as the conduction period of the Buck converter is controlled so that it is towards the middle of a half wave in the current through the diode 524, assuming that the current through the diode 524 has a generally symmetrical waveform. That is, the operation of the Buck converter is controlled so that magnitude of the half wave at the start of the conduction period is made similar to (or the same as) the magnitude of the half wave at the the end of the conduction period. This can increase the likelihood that the current through the diode 824 is sufficient for the additional Buck converter, and therefore reduce the likelihood that current is drawn from the output capacitor 810.

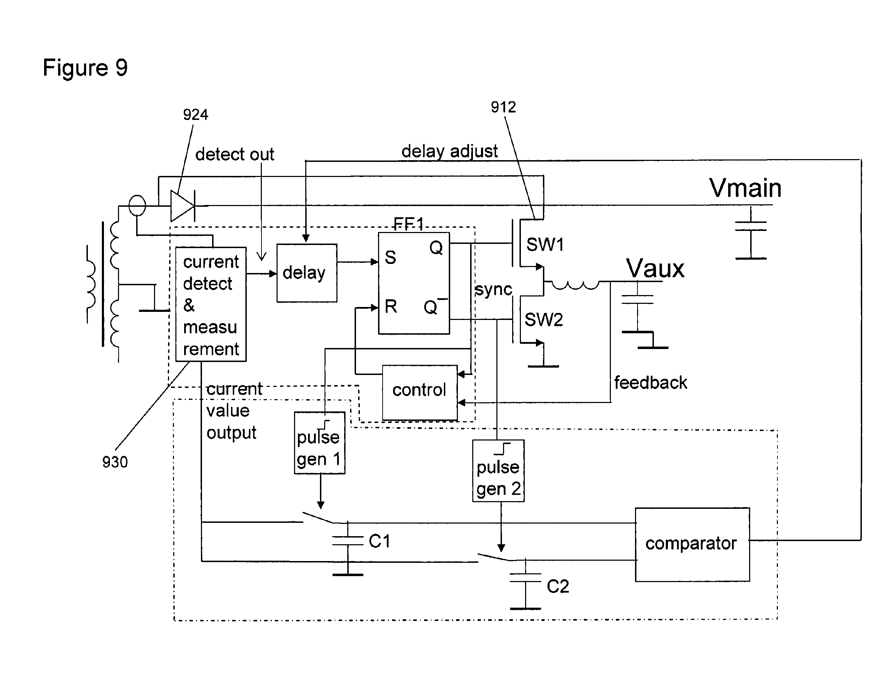

Figure 9 illustrates another embodiment of the invention. The circuit of Figure 8 is similar to that of Figure 8 except the current detect and measurement component and SW1 912 are connected to the anode of the diode 924. In such an embodiment, the switch SW1 912 should be a bi-directional one for the same reasons discussed above in relation to Figure 7.

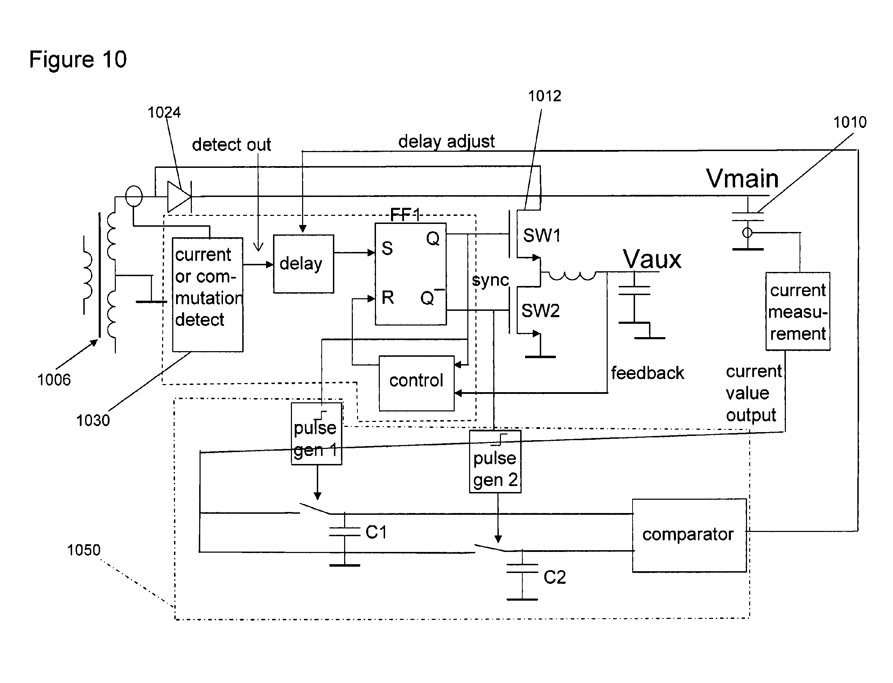

Figure 10 illustrates a circuit according to another embodiment of the invention. The circuit of Figure 10 is similar to the circuit of Figure 9, and those components that are in common with both Figures will not be described again here. The circuit of Figure 10 differs from Figure 9 in that the delay adjuster 1050 samples the current at the main output of the converter, as opposed to the current through the diode 1024. Therefore, the current or commutation detector 1030 of Figure 10 does not have to also measure the current through the diode 1024, as is required by the circuit of Figure 9.

Under some operating conditions, which can include some combinations of the load on the main output and the load on the auxiliary output, the current that is required through SW1 1012 is larger than the instantaneous current through the output winding of the transformer 1006. In examples where SW1 1012 is connected to the anode of the diode 1024 (such as in Figure 10), this can lead to a temporary drop of the voltage across the winding as the additional converter cannot draw current from the main output capacitor 1010 as the output diode 1024 that is between the two is reverse biased.

One way of addressing this problem is to use a switch (or any other suitable component) that can bypass the diode 1024 to enable the additional converter to draw current from the main output capacitor 1010 as required.

The diode 1024 can be replaced by an intelligent synchronous rectifier consisting of a MOSFET (or other suitable device) that is on when a current is flowing through the winding of the transformer 1006. When the winding is not carrying current, the intelligent synchronous rectifier is turned off. As long as the intelligent synchronous rectifier is on, it can also carry current in the reverse direction, and in this way the additional converter can draw current from the main output capacitor when there is no current flowing through the winding, while maintaining the rectifying action as to prevent reverse current flowing into the winding of the transformer.

It will be appreciated that the embodiments that are described above in relation to circuits having a single additional converter, and therefore a single auxiliary voltage, can be extended to circuits with multiple additional converters that provide multiple auxiliary output voltages. The multiple additional converters may comprise one or more additional Buck converters.

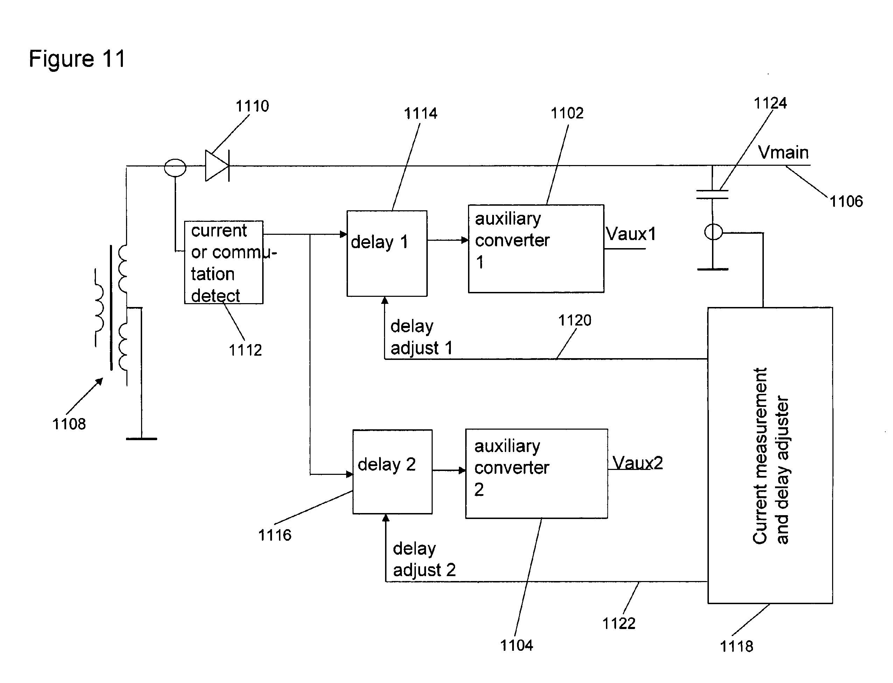

Figure 11 illustrates a circuit having two additional/auxiliary converters according to an embodiment of the invention.

The circuit of Figure 11 includes two additional/auxiliary converters 1102, 1104 that are connected to the output Vmain 1106 of a main converter. It will be appreciated that the auxiliary converters 1102, 1104 have components such as switches, a coil, an output capacitor and a controller, for example as discussed above and as known in the art.

The main converter includes a transformer 1108, and a diode 1110 connected between the transformer 1108 and the main output Vmain 1106. Connected to the anode of the diode 1110 is a current or commutation detector 1112, although it will be appreciated from the preceding embodiments that the current or commutation detector 1112 could be connected to the cathode of the diode 1110 in other embodiments.

The output of the current or commutation detector 1112 is provided to a first delay component 1114 and a second delay component 1116, which are associated with the first auxiliary converter 1102 and second auxiliary converters 1104 respectively.

The circuit also includes a current measurement and delay adjuster 1118, which is connected to the output Vmain 1106 of the main converter, and provides the first and second delay components 1114, 1116 with delay adjust signals 1120, 1122. In this example, the current measurement and delay adjuster 1118 measures the output current in order to provide timing control of the two auxiliary converters 1102, 1104. A current measurement system used by the current measurement and delay adjuster 1118 can be similar to the system of Figure 10.

It has been found that using a different delay for each of the auxiliary converters 1102, 1104 can improve the performance of the circuit, and can reduce the ripple at the main output capacitor 1124.

In one embodiment, the delays can be made such that the on-time (conduction periods) of both control switches/FETs of the auxiliary converters 1102, 1104 are centred around the peak of the output current through the diode. For example, the two delay adjust signals 1120, 1122 can be generated by circuits such as those illustrated in Figures 5 and 8.

In other embodiments, dependant on the ratio of the load current drawn by the main output Vmain and the total power drawn by the auxiliary outputs Vaux1 and Vaux2, it has been found that centring the conduction periods of the auxiliary converters 1102, 1104 around the peak of the output current through the diode does not provide the optimum levels of the RMS current flowing in the main output capacitor 1106. Instead, it can be advantageous to have the two currents that are provided to the auxiliary outputs to be arranged in such a way that none of the two auxiliary output currents overlaps the other completely. If both auxiliary outputs are centred around the peak of the resonating current, then one of the two auxiliary outputs will overlap the other completely, and this can increase the likelihood that current will need to be drawn from the main output capacitor to satisfy the auxiliary outputs.

In one embodiment, the current measurement and delay adjuster 1118 can use an algorithm to determine the delay that should be applied by the two delay components 1114, 1116 such that the associated auxiliary converters 1102, 1104 draw a combined current that more closely matches the current envelope provided by the secondary winding of the transformer 1108. One way of achieving this is to force a first delay circuit to initially have a larger delay than a second delay circuit. The control circuit will then automatically adjust the proper delay.

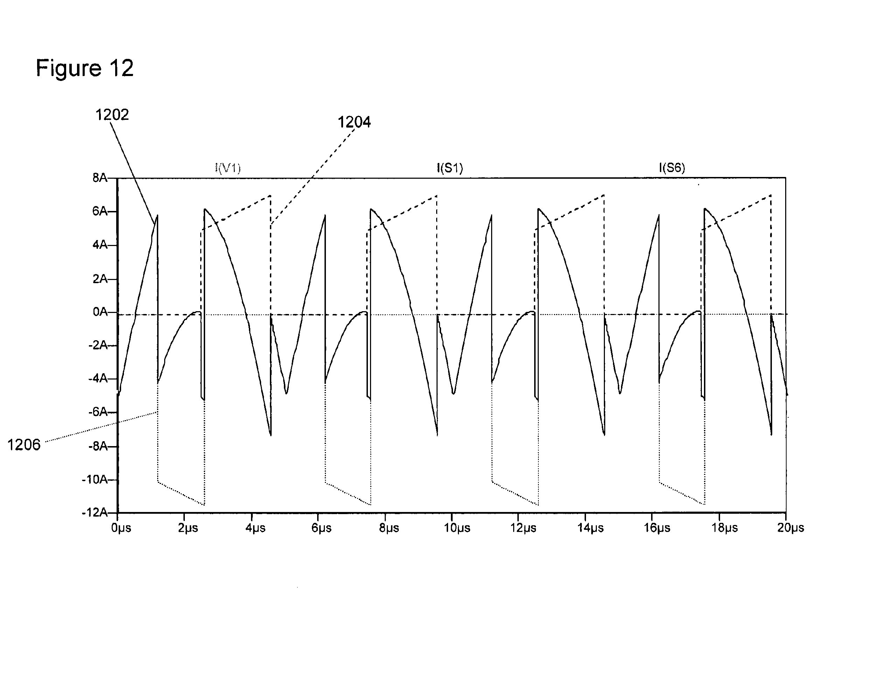

Figure 12 illustrates example waveforms for a circuit having two auxiliary/additional converters according to an embodiment of the invention.
Figure 12 shows three waveforms:
   the current 1202 in the output capacitor of the main converter (for example the resonant converter);
   the current 1204 through the control FET/switch of the first auxiliary converter; and
   the current 1206 through the control FET/switch of the second auxiliary converter.

In order to provide the functionality of Figure 11 or 12, the current through the main output capacitor must be measured in order to be able to apply an optimisation algorithm and determine the delay adjust signals for the auxiliary converters. This in contrast to embodiments of the invention that have a single auxiliary converter, whereby the current at the output winding of the transformer can be used for the optimisation algorithm.

Measuring the current through the main output capacitor enables the ripple current in the output capacitor to be minimised. In examples with only one auxiliary output, the current through the secondary winding just before and just after the conduction period of the switch of the buck converter is equal to the current in the main output capacitor (except for the DC offset due to the load of the main converter output itself). However, with multiple auxiliary converters, this relationship between the current through the secondary winding and the current in the main output capacitor is lost. This is because, at the instant that the switch of one of the auxiliary converters is switched off, there are more possibilities that a particular auxiliary converter could be the first to be switched on (and then the current through the output winding is a measure of the current in the capacitor), or it could be that another auxiliary output is already drawing current. In the latter case, the current though the output winding can only be used to obtain a measure of the current through the capacitor if the value of the current to that second auxiliary output is also known.

It will be appreciated that embodiments of the invention can be used with three or more auxiliary/additional converters, and the switch-on instant of one or more, or all, of the auxiliary converters can be controlled according to any of the embodiments disclosed herein.

In examples having three auxiliary outputs, the timing of the switch-on of the auxiliary converters can be controlled such that the envelope of the sum of the currents drawn by the additional outputs is synchronized with the current through the transformer winding in such a way that also the shape resembles that of the winding current. That is, the maximum sum current occurs at the instant that also the winding current is at or near its peak value.

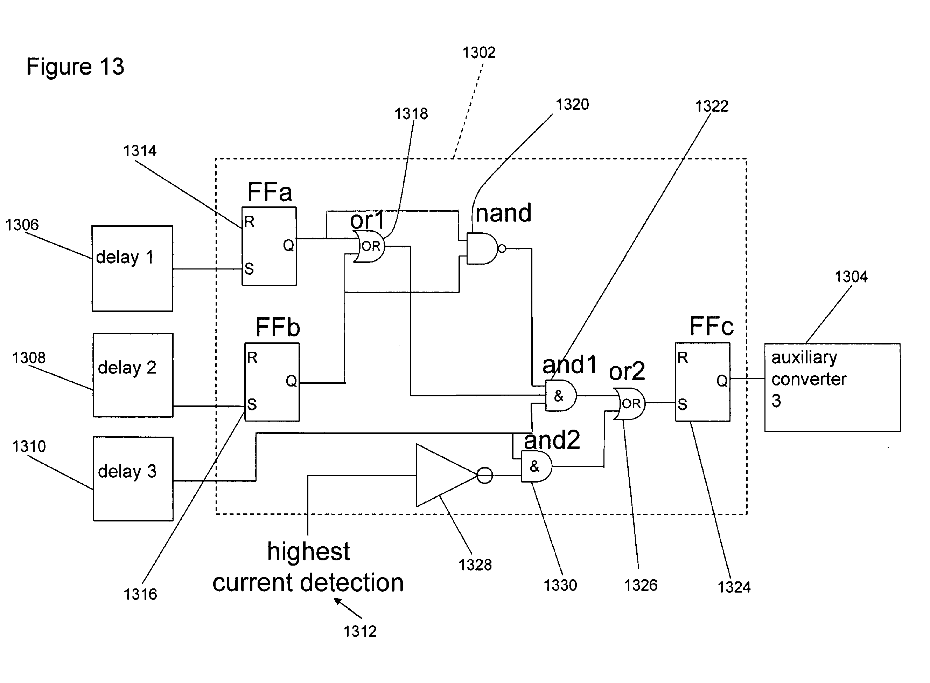

The auxiliary converter that draws the highest amount of current out of the main output capacitor can be controlled so that it is the second auxiliary converter to be switched on. Each of the other auxiliary converters can be controlled such that their conduction period is centred around the peak current through the main output capacitor. Such an example is illustrated by Figure 13.

Figure 13 illustrates an additional auxiliary controller 1302 according to an embodiment of the invention. The additional auxiliary controller 1302 is configured to control the operation of auxiliary converter 3 1304 such that it is the second converter to be switched on when it has the highest output current of all of the auxiliary converters.

Figure 13 shows three delay components 1306, 1308, 1310 that are each associated with an auxiliary converter, although only auxiliary converter 3 1304 is shown in Figure 13, in order to aid clarity.

The additional auxiliary controller 1302 receives input signals from each of the delay components 1306, 1308, 1310, and provides an output to control the switching of auxiliary converter 3 1304. The additional auxiliary controller 1302 also receives a "highest current detection" signal that is set high when auxiliary converter 3 is determined as providing the highest output current of the auxiliary converters.

It will be appreciated that the highest current detection signal 1312 can be derived from direct measurement of the output currents of the auxiliary converters, and that various implementations of doing this are known in the art. Alternatively, the highest current detection signal 1312 can be derived from any other signal representing the output currents.

Further additional auxiliary controllers 1302 can be located between the three delay components 1306, 1308, 1310 and either, or both, of the other auxiliary converters (auxiliary converter 1 and auxiliary converter 2), if these auxiliary converters are also to be monitored to determine if they output the highest current.

The additional auxiliary controller 1302 provides the following functionality:
- If the highest current detection signal 1312 indicates that auxiliary converter 3 1304 is providing the highest output current, then the output signal of the additional auxiliary controller 1302 causes the auxiliary converter to switch on when: (i) delay 3 1302 has expired; and (ii) only one of delay 1 1306 and delay 2 1308 have expired. In this way, it is ensured that auxiliary converter 3 1304 is the second auxiliary converter to be operated.
- If the highest current detection signal 1312 indicates that the output current of the auxiliary converter 3 1304 is not the highest, then auxiliary converter 3 1304 is operated upon the expiry of delay 3 1310 in the same way as described above.

The additional auxiliary controller 1302 of Figure 13 includes two flip flops FFa, FFb 1314, 1316 that receive the signals from delay 1 1306 and delay 2 1308 respectively. The flip flops 1314, 1316 are used to convert a pulse output from the delay components 1306, 1308 to a logic state, and it will be appreciated that the flip flops 1314, 1316 can be reset at the end of an operating cycle in any known way. The outputs of the two flip flops 1314, 1316 are provided to an OR gate 1318, a NAND gate 1320, the outputs of which are connected as two inputs to an AND gate 1322. This logic provides EXCLUSIVE-OR functionality. The third input of the AND gate 1322 is provided by delay 3 1310 such that the output of the AND gate 1322 can set an output flip flop FFc 1324 (via an or gate 1326). The output of the flip flop 1324 in turn controls the auxiliary converter 3 1304. In this way, irrespective of the value of the highest current detection signal 1312, the auxiliary converter 3 1304 will be switched on when delay 3 1310 has expired, and only one of delay 1 1306 and delay 2 1308 have expired.

The additional auxiliary controller 1302 has another circuit path to the OR gate 1326, the output of which sets the output flip flop 1324. This second branch passes the highest current detection signal 1312 through a NOT gate 1328, and the output of the NOT gate 1328 is provided as an input to an AND gate 1330. As the highest current detection signal is logic 1 when the output current of auxiliary converter 3 1304 is the highest of all of the auxiliary converters, the output of the AND gate 1330 can never be logic 1 when the highest current detection signal 1312 is logic 1. The other input to the AND gate 1330 is provided by delay 3 1310. In this way, the second branch sets the output of AND gate 1330 to logic 1, and therefore triggers auxiliary converter 3 1304, when the output current of the auxiliary converter 3 1304 is not the highest and delay 3 1310 has expired.

It will be appreciated that the second branch in additional auxiliary controller 1302 is used to operate the auxiliary converter 3 1304 in the same way as other embodiments of the invention (that is, as soon as delay 3 1310 has expired) if its output current is not the highest.

The additional auxiliary controller 1302 can ensure that the auxiliary converter that carries the highest current can only be activated as the second auxiliary converter.

It will be appreciated that the additional auxiliary converter 1302 of Figure 13 could be implemented in numerous different ways, and that Figure 13 illustrates one non-limiting example of a circuit that can be used to control an auxiliary converter such that it is the second auxiliary converter to be switched on when it has the largest output current.

Some embodiments may include a processor (such as a delay adjuster) that is configured to determine whether or not centring the on-time's of the respective control switches around the peak of the winding current provides adequate, or optimal, performance. Such determination can use a ratio of the power at the main output to the sum of the powers at the auxiliary outputs. It has been identified that centring all of the auxiliary currents may not always provide overall optimum performance of the circuit, although may yield a local optimum.

Embodiments disclosed herein can be used with any power supply that provides more than one fully regulated output.

One or more embodiments disclosed herein relate to a subsequent auxiliary converter that draws current from the main converter (either from the output capacitor or from the winding (or auxiliary winding)) when the current that the converter is delivering is at its maximum.

In some embodiments, the time that the subsequent auxiliary converter draws current is dynamically adjustable as the instant of maximum current delivery can be variable, for example variable with input voltage and output load. This variation in the instant of maximum current delivery is especially true for resonant converters that are operated below the frequency of the series resonance (and therefore the current delivery drops to zero between each half-wave that is delivered), and also applies for the resonant converters operating above that frequency the frequency (whereby the current delivery does not drop to zero between each half-wave that is delivered). Therefore, the optimised delay period can vary with input voltage and load.

## Claims

1. A controller (302) for an additional voltage converter, wherein the additional converter receives current from a main resonant converter, the controller configured to provide a switch control signal for controlling a switch (312) of the additional converter,
the controller (302) comprising:
a first input configured to receive a first input signal (324) representative of a signal in the main resonant converter; and
a delay component (332),
wherein the controller (302) is configured to determine when the first input signal (324) exceeds a zero value, and provide a signal to the delay component (332); and
the delay component (332) is configured to provide a switch control signal to the additional voltage converter such that the switch of the additional converter is operated after the expiry of a delay after the first input signal exceeds a zero value in order to start a conduction period of the additional converter.

2. The controller according to claim 1, wherein the first input signal (324) is representative of the voltage across a secondary winding (306) of the main resonant converter, and the delay component (332) is configured to provide the switch control signal to the additional voltage converter such that the switch of the additional converter is operated after the expiry of a delay after a commutation in the first input signal (324).

3. The controller of claim 1 or claim 2, wherein the first input signal (324) is representative of the current flowing through a secondary winding (306) of the resonant converter or through an output diode (324) of the resonant converter, and the delay component (332) is configured to provide the switch control signal to the additional voltage converter such that the switch of the additional converter is operated after the expiry of a delay after the first input signal rises from a zero value, or after the rate of change of the first input signal with respect to time rises from a zero value.

4. The controller of any preceding claim, further comprising a second input for receiving a second input signal (326) representative of the output of the additional converter, wherein the controller is configured to process the second input signal and provide a switch control signal such that the switch of the additional converter is operated and the conduction period of the additional converter is ended in order to provide a desired additional output voltage.

5. The controller of any preceding claim, wherein the controller is configured to apply a switching frequency to the additional converter that is double the switching frequency of the resonant converter.

6. The controller of any preceding claim, wherein the delay is a fixed delay period.

7. The controller of any one of claims 1 to 5, wherein the delay is a variable delay period.

8. The controller of claim 7, further comprising a delay adjuster (550) configured to provide a delay adjust signal (552) to the delay component (532), wherein the delay adjuster is configured to adjust the length of the delay such that the conduction period of the additional converter is centred, or substantially centred, around a peak current in the first input signal.

9. The controller of claim 8, wherein the delay adjuster (550) is configured to record an operational parameter of the additional converter or main converter when the switch (512) of the additional converter is turned on as a first value, and record an operational parameter of the additional converter or main converter when the switch (512) of the additional converter is turned off as a second value, and the delay adjuster (512) comprises:
a comparator (566) configured to compare the first value with the second value, and output a delay adjust signal (552) that is configured to set the delay of the delay component (532) in order to reduce the difference between the first and second values.

10. The controller of claim 9, wherein the operational parameter is one or more of:
a value of the first signal; and
a value of the output of the main converter.

11. The controller of claim 8, wherein the delay adjuster (550) is configured to record the time between (i) the first input signal exceeding a zero value and (ii) a switch-on of the additional converter as a first value, and record (iii) the time between a switch-off of the additional converter and (iv) a change to a zero value in the first input signal as a second value, and the delay adjuster (550) comprises:
a comparator (566) configured to compare the first value with the second value, and output a delay adjust signal that is configured to set the delay of the delay component in order to reduce the difference between the first and second values.

12. The controller of any preceding claim, wherein the converter is configured to provide switch control signals for controlling switches of a plurality of additional converters, and the controller (302) further comprises a current measurement and delay adjuster (1118) that is configured to measure the output current of the additional voltage converter or the main resonant converter, and provide signals to delay components associated with each of the additional converters such that the current that is drawn from the additional converters is made similar to the current provided by the output of the main resonant converter.

13. The controller of any preceding claim, comprising an additional controller (1302) that is configured to determine which of a plurality of additional converters is providing the highest output current, and operate the determined additional converter (1314) such that it is the second of the plurality of additional converters to be operated.

14. The controller of claim 13, wherein the additional controller (1302) is configured to receive a signal (1312) representative of whether or not the additional converter (1304) is providing the highest output current of one or more other additional converters, wherein the additional controller (1302) is configured to:
if the additional converter (1304) is providing the highest output current, operate the additional converter (i) after the expiry of the delay and (ii) when only one delay associated with the other additional converters has expired; and
if the additional converter (1304) is not providing the highest output current, operate the additional converter upon the expiry of the delay.

15. A method of controlling an additional voltage converter, wherein the additional converter receives current from a main resonant converter, the method comprising:
receiving a first input signal (324) representative of a signal in the main resonant converter;
determining when the first input signal (324) exceeds a zero value; and
providing a switch control signal to the additional voltage converter such that the switch of the additional converter is operated after the expiry of a delay after the first input signal exceeds a zero value in order to start a conduction period of the additional converter.
